# EUROPEAN PATENT SPECIFICATION

(11) **EP 2 998 558 B1**
(45) Date of publication and mention of the grant of the patent: **19.07.2017**
(21) Application number: 14382350.8
(22) Date of filing: 17.09.2014
(51) Int. Cl.: F02K 3/06, F02K 3/077, F02C 7/36, F02C 3/107, F16H 1/20

(54) **Multi-fan engine with an enhanced power transmission**
Multi-Fan-Motor mit verbesserter Kraftübertragung
Moteur multi-ventilateurs avec une transmission de puissance améliorée

(43) Date of publication of application: 23.03.2016
(73) Proprietor: Airbus Operations, S.L., 28906 Getafe Madrid (ES)
(72) Inventor: Bailey Noval, Nicolás, 28906 Getafe (ES); Llamas Sandín, Raúl, 28906 Getafe (ES)
(74) Representative: Elzaburu S.L.P.

(56) References cited:
- CN-A- 102 001 440
- FR-A1- 3 009 028
- US-A- 3 054 577
- US-A1- 2014 117 152

## Description

### FIELD OF THE INVENTION

This invention relates to propulsion engines and more particularly to multi-fan engines for aircraft and other vehicles.

### BACKGROUND OF THE INVENTION

In the aeronautical industry the current trend in turbofan design is to increase the bypass ratio in order to improve fuel consumption through increased propulsive efficiency and to reduce perceived noise on ground. In conventional turbofan engines, the pursuit of higher propulsive efficiency requires increasing the fan diameter in order to produce a higher by-pass mass flow at lower slipstream velocities. The incremental evolution of the current state of the art envisages Very High Bypass Ratio (VHBPR) turbofans (BPR greater than 15) having fan diameters of up to 174".

As the continuous increase of the fan diameter generates problems of ground clearance and engine integration and installation in the wing or fuselage, an innovative turbofan engine concept has been proposed consisting in splitting the secondary by-pass flow into a plurality of fans of smaller diameter, all connected to the power generation unit (known as multi-fan engines).

For example US 6,792,745 B2 discloses a turbofan jet engine having a housing and an engine core disposed in the housing. The engine core includes at least a compressor, turbine, and a drive shaft. The drive shaft defines a drive shaft axis. A plurality of fans is disposed in the housing and each fan rotates about a separate fan axis. Each of the fan axes is axially offset from the drive shaft axis. The turbofan jet engine further includes a drive system operably interconnecting the engine core and fans so as to drive the rotation of the fans and selectively disengage selected fans from the engine core.

EP 1,916,406 A2, US 8,015,796 B2, US 8,402,740 B2 and US 2013/0223991 A1 also disclose multi-fan engines.

In the above-mentioned prior art, each fan is driven by a shaft connected by a particular mechanical arrangement to the shaft driven by the turbine of the engine core. In the case of US 6,792,745 said mechanical arrangement is a gearbox drive system operably coupled between the turbine-driven shaft and the shafts of the fans.

Said mechanical arrangements raise a number of problems, particularly related to their capability to transmit power between fans through a mechanical gear-box of acceptable size and weight, so that new approaches to multi-fan engines are highly sought after by the aeronautical industry.

This invention is addressed to the attention of that demand.

### SUMMARY OF THE INVENTION

In one aspect this invention provides a multi-fan engine comprising a gas turbine engine including a turbine driving a shaft and a plurality of fans wherein one of the fans is connected to the shaft driven directly by the turbine and all the fans are encased by geared rings configured to transmit torque from each fan to every adjacent fan to which they are geared so that the mechanical power is transmitted from the fan directly driven by the turbine to all the fans.

The power generated by the turbine is therefore transmitted through a shaft to one of the fans which distributes the power to its adjacent fans through a geared connection between them.

In an embodiment the multi-fan engine further comprises intermediate gears between the fans encased by geared rings to transmit the torque between adjacent fans, said intermediate gears being connected to linear actuators for disengaging the mechanical connection between any couple of adjacent fans if needed due to a mechanical failure or for any other reason.

In another aspect, the invention refers to an aircraft provided with the above mentioned multi-fan engines and particularly to fuselage-mounted multi-fan engines having their fan arrangement closely adapted to the external surface of the fuselage of the aircraft so that a significant portion of the boundary layer airflow is captured by the fans.

Other characteristics and advantages of the present invention will be clear from the following detailed description of embodiments illustrative of its object in relation to the attached figures.

### BRIEF DESCRIPTION OF THE DRAWINGS

Figure 1 is a schematic plan view of a multi-fan engine.
Figure 2 is a schematic plan view of a multi-fan engine having a power transmission mechanism known in the art.
Figure 3 is a schematic plan view plan of a multi-fan engine provided with a power transmission mechanism according to the invention.
Figure 4 is a schematic front view illustrating an embodiment of a multi-fan engine with a central fan and two lateral fans.
Figure 5 is a schematic front view illustrating an embodiment of a multi-fan engine with lateral fans of lesser size than the central fan.
Figure 6 is a schematic front view illustrating an embodiment of a multi-fan engine with five fans of the same dimension.
Figure 7 is a schematic plan view illustrating an embodiment of a multi-fan engine with intermediate gears between the fans.
Figure 8 is a schematic front view of an aircraft provided with two fuselage-mounted multi-fan engines according to the invention.

### DETAILED DESCRIPTION OF THE INVENTION

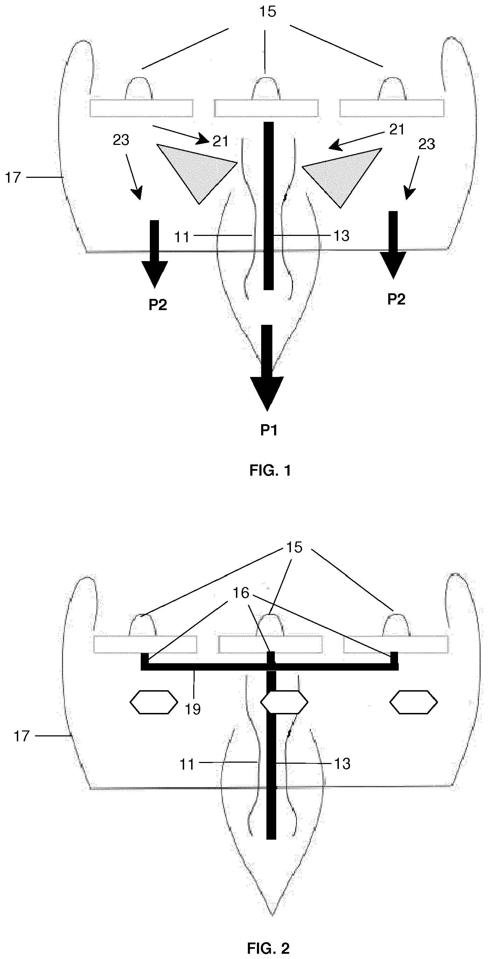

As shown in Figure 1 the main components of a multi-fan engine are a casing 17, a gas turbine engine 11 including a turbine driving a main shaft 13 and a plurality of fans 15. As well known in the art, the multi-fan engine comprises primary flow-paths 21 for conducting part of the air accelerated by the fans 15 to the gas turbine engine 11 for generating the propulsive jet P1 and secondary flow-paths 23 for conducting the rest of the air accelerated by the fans 15 by-passing the gas turbine engine 11 to produce the propulsive jets P2.

The mechanical arrangement of the prior art mentioned in the Background is illustrated in Figure 2. Each fan 15 is driven by a shaft 16 connected to the main shaft 13 by a power transmission mechanism 19.

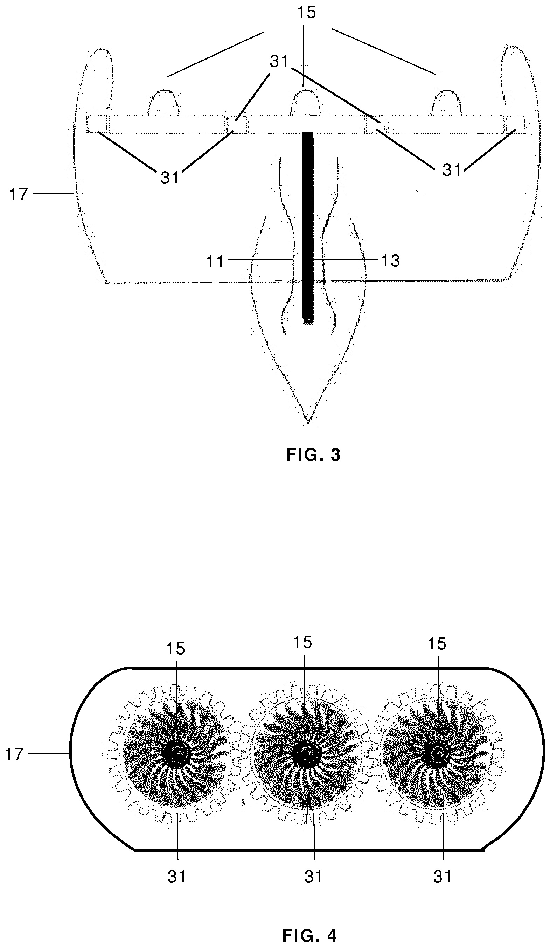

As shown in Figure 3, in the multi-fan engine of the invention only one fan 15 is directly driven by the shaft 13 and all the fans 15 are encased by a geared ring 31 so that the rotation of the central fan 15 driven by the shaft 13 can be mechanically transmitted to the rest of the fans 15. The multi-fan engine has therefore only one powered shaft.

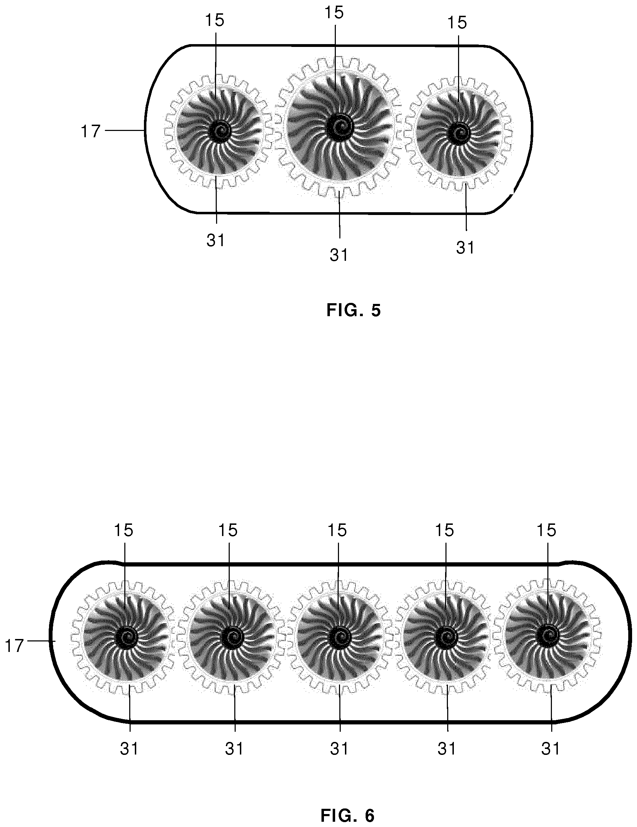

The multi-fan engine of the invention can be configured with fans 15 of the same size as illustrated in Figures 4 and 6 or with fans 15 of different size as illustrated in Figure 5 for meeting particular needs and the arrangement can be such that the axes of rotation of the fans do not need to be aligned. A proper combination of number and dimension of fans 15 may provide a multi-fan engine of a high by-pass ratio of a suitable dimension for commercial aircraft.

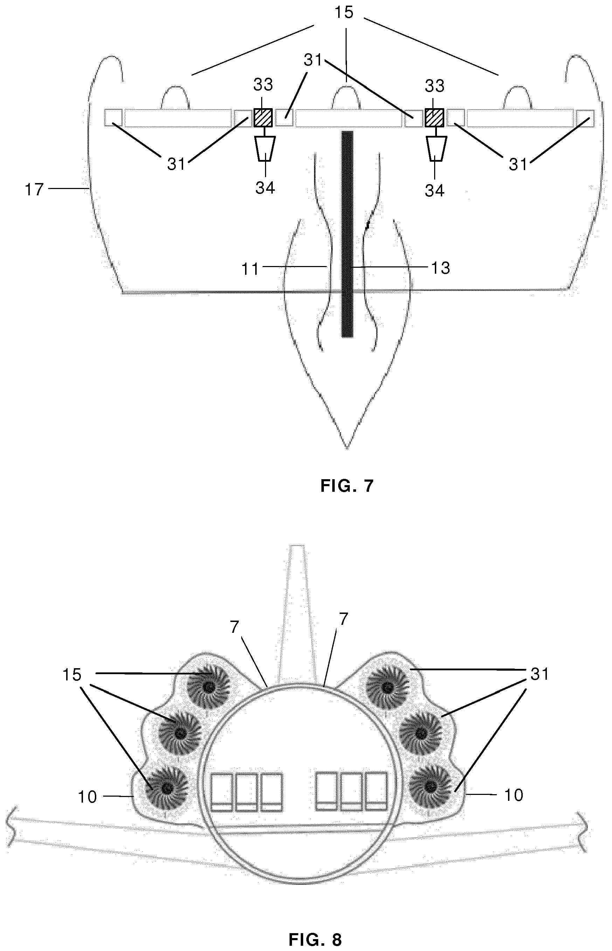

An alternative embodiment of the present invention incorporates intermediate gears 33 to connect adjacent fans 15 encased by geared rings 31 as shown in Figure 7. The intermediate gears 33 can be pulled back by means of linear actuators 34 so that the power transmission between adjacent fans 15 can be disengaged in cases, for example, of blade rupture, mechanical failure or any other reason.

Among others, the multi-fan engine of the invention has the following advantages with respect to the prior art:
- Lighter overall arrangement. Heavy gearboxes and shafts are avoided.
- Easier mounting and increased reliability due the smaller number of components.
- No need of space allocation for the power transmission mechanism.
- The accessibility of the gears facilitates the inspection.
- The overall propulsive efficiency is higher than in a conventional single fan engine due to the recovery of rotational energy from the wake due to the fact that the wakes of the individual adjacent fans rotate in opposite directions. An additional advantage of this fact is that the torque transmitted by the engine to the airframe can be reduced or eliminated.
- The geared rings of each fan provide more strength and stiffness to the fan blades and enable a blade design better adapted to the local flow, for example, by having larger chords further from the fan shaft.

The multi-fan engine of the invention can be mounted in the wings or, preferably, the fuselage of aircraft.

Figure 8 shows an aircraft provided with two fuselage-mounted multi-fan engines 10 with three fans 15 encased by geared rings 31 arranged at a suitable distance of the external surface 7 of the fuselage so as to capture a significant portion of the fuselage aerodynamic boundary layer to increase propulsive efficiency. The adaptability of the multi-fan engine of the invention to the external surface 7 of the aircraft fuselage is therefore a significant advantage of the invention.

Although the present invention has been described in connection with various embodiments, it will be appreciated from the specification that various combinations of elements, variations or improvements therein may be made, and are within the scope of the invention as defined by the appended claims.

## Claims

1. A multi-fan engine comprising a gas turbine engine (11) including a turbine driving a shaft (13) and a plurality of fans (15), **characterized in that**:
- one of the fans (15) is connected to the shaft (13) driven directly by the gas turbine engine (11);
- all the fans (15) are encased by geared rings (31) configured to transmit a tangential force, and therefore a torque, from each fan to every adjacent fan to which is geared so that the mechanical power is transmitted from the fan directly driven by the gas turbine engine (11) to all other fans.

2. A multi-fan engine according to claim 1, wherein the plurality of fans (15) comprises, in addition to the fan driven by the shaft (13), at least one fan at each side of it.

3. A multi-fan engine according to claim 2, wherein all fans (15) have the same diameter.

4. A multi-fan engine according to claim 2, wherein the side fans have a smaller diameter than the fan driven by the shaft (13).

5. A multi-fan engine according to claim 2, wherein the side fans have a larger diameter than the fan driven by the shaft (13).

6. A multi-fan engine according to claim 2, further comprising intermediate gears (33) between the fans (15) encased by geared rings (31) to transmit the torque between adjacent fans, said intermediate gears (33) being connected to linear actuators (34) for disengaging the mechanical connection between any couple of adjacent fans.

7. Aircraft having at least a multi-fan engine according to any of claims 1-6.

8. Aircraft according to claim 7 comprising two fuselage-mounted multi-fan engines (10) having their fans (15) encased by geared rings (31) arranged at a suitable distance of the external surface (7) of the aircraft fuselage so as to capture a significant portion of the fuselage aerodynamic boundary layer to increase propulsive efficiency.

## Patentansprüche

1. Multi-Flügelrad-Motor aufweisend einen Gasturbinenmotor (11) mit einer Turbine, die eine Welle (13) antreibt, und mehrere Flügelräder (15), **dadurch gekennzeichnet, dass**:
- eines der Flügelräder (15) mit der direkt von dem Gasturbinenmotor (11) angetriebenen Welle (13) verbunden ist;
- alle Flügelräder (15) von Zahnringen (31) ummantelt sind, die konfiguriert sind, eine Tangentialkraft und folglich ein Drehmoment von jedem Flügelrad zu jedem mit ihm verzahnten benachbarten Flügelrad zu übertragen, so dass die mechanische Kraft von dem direkt von dem Gasturbinenmotor (11) angetriebenen Flügelrad zu allen anderen Flügelrädern übertragen wird.

2. Multi-Flügelrad-Motor nach Anspruch 1, wobei die mehreren Flügelräder (15) zusätzlich zu dem von der Welle (13) angetriebenen Flügelrad mindestens ein Flügelrad an jeder Seite dessen aufweisen.

3. Multi-Flügelrad-Motor nach Anspruch 2, wobei alle Flügelräder (15) den gleichen Durchmesser haben.

4. Multi-Flügelrad-Motor nach Anspruch 2, wobei die Seitenflügelräder einen kleineren Durchmesser haben als das von der Welle (13) angetriebene Flügelrad.

5. Multi-Flügelrad-Motor nach Anspruch 2, wobei die Seitenflügelräder einen größeren Durchmesser haben als das von der Welle (13) angetriebene Flügelrad.

6. Multi-Flügelrad-Motor nach Anspruch 2, ferner aufweisend Zwischenzahnräder (33) zwischen den von den Zahnringen (31) ummantelten Flügelrädern (15), um das Drehmoment zwischen benachbarten Flügelrädern zu übertragen, wobei die Zwischenzahnräder (33) mit linearen Aktuatoren (34) verbunden sind, um die mechanische Verbindung eines jeden Paars benachbarter Flügelräder zu lösen.

7. Flugzeug mit mindestens einem Multi-Flügelrad-Motor nach einem der Ansprüche 1 bis 6.

8. Flugzeug nach Anspruch 7, aufweisend zwei rumpfmontierte Multi-Flügelrad-Motoren (10), deren von Zahnringen (31) ummantelte Flügelräder (15) in einem geeigneten Abstand von der Außenfläche (7) des Flugzeugrumpfs angeordnet sind, um so einen wesentlichen Teil der aerodynamischen Grenzschicht des Rumpfs einzufangen, um die Vortriebsleistung zu erhöhen.

## Revendications

1. Moteur à plusieurs ventilateurs comprenant un moteur de turbine à gaz (11) comprenant une turbine entraînant un arbre (13) et une pluralité de ventilateurs (15), **caractérisé en ce que** :
l'un des ventilateurs (15) est raccordé à l'arbre (13) entraîné directement par le moteur de turbine à gaz (11) ;
tous les ventilateurs (15) sont enfermés par des anneaux réducteurs (31) configurés pour transmettre une force tangentielle et par conséquent un couple, à partir de chaque ventilateur à chaque ventilateur adjacent auquel il est relié par engrenage de sorte que la puissance mécanique est transmise du ventilateur directement entraîné par le moteur de turbine à gaz (11) à tous les autres ventilateurs.

2. Moteur à plusieurs ventilateurs selon la revendication 1, dans lequel la pluralité de ventilateurs (15) comprend, en plus du ventilateur entraîné par l'arbre (13), au moins un ventilateur de chaque côté de ce dernier.

3. Moteur à plusieurs ventilateurs selon la revendication 2, dans lequel tous les ventilateurs (15) ont le même diamètre.

4. Moteur à plusieurs ventilateurs selon la revendication 2, dans lequel les ventilateurs latéraux ont un plus petit diamètre que le ventilateur entraîné par l' arbre (13).

5. Moteur à plusieurs ventilateurs selon la revendication 2, dans lequel les ventilateurs latéraux ont un plus grand diamètre que le ventilateur entraîné par l'arbre (13).

6. Moteur à plusieurs ventilateurs selon la revendication 2, comprenant en outre des engrenages intermédiaires (33) entre les ventilateurs (15) enfermés par les anneaux réducteurs (31) pour transmettre le couple entre les ventilateurs adjacents, lesdits ventilateurs intermédiaires (33) étant raccordés aux actionneurs linéaires (34) pour dégager le raccordement mécanique entre n'importe quelle paire de ventilateurs adjacents.

7. Aéronef ayant au moins un moteur à plusieurs ventilateurs selon l'une quelconque des revendications 1 à 6.

8. Aéronef selon la revendication 7, comprenant deux moteurs à plusieurs ventilateurs (10) monté sur le fuselage, ayant leurs ventilateurs (15) enfermés par des anneaux réducteurs (31) agencés à une distance appropriée de la surface externe (7) du fuselage de l'aéronef afin de capturer une partie significative de la couche de limite aérodynamique du fuselage pour augmenter l'efficacité de propulsion.
